Europäisches Patentamt

**European Patent Office**

Office européen des brevets

(11) Veröffentlichungsnummer : **0 104 547**
**B1**

(12) **EUROPÄISCHE PATENTSCHRIFT**

(45) Veröffentlichungstag der Patentschrift :
18.06.86

(21) Anmeldenummer : **83109098.0**

(22) Anmeldetag : **15.09.83**

(51) Int. Cl.⁴ : **B 60 H   3/00**, G 05 D 23/19

(54) **Lüftungs-, insbesondere Klimaanlage für ein Fahrzeug.**

(30) Priorität : **23.09.82 DE 3235162**

(43) Veröffentlichungstag der Anmeldung :
**04.04.84 Patentblatt 84/14**

(45) Bekanntmachung des Hinweises auf die Patenterteilung : **18.06.86 Patentblatt 86/25**

(84) Benannte Vertragsstaaten :
**DE FR GB IT**

(56) Entgegenhaltungen :
FR-A- 1 490 607
FR-A- 1 562 064
FR-A- 2 148 890
FR-A- 2 170 707
GB-A- 2 083 610
US-A- 2 650 534
US-A- 4 205 944

(73) Patentinhaber : **ROBERT BOSCH GMBH**
**Postfach 50**
**D-7000 Stuttgart 1 (DE)**

(72) Erfinder : **Steinmann, Helmut, Ing. grad.**
**Höllhäuserweg 66**
**D-7570 Baden-Baden (DE)**

## Beschreibung

### Stand der Technik

Die Erfindung geht aus von einer Lüftungsanlage, insbesondere einer Klimaanlage gemäß dem Oberbegriff des Hauptanspruchs. Eine durch die DE-B-22 38 938 bekannte Lüftungsanlage hat einen von außen in den Fahrgastraum des Fahrzeugs führenden Lüftungskanal und in diesen eingebaut eine Durchflußregulierklappe und ein mittels eines Elektromotors antreibbares Gebläse. Im Fahrzeugbug ist eine Venturidüse angeordnet. An die Venturidüse ist ein Faltenbalg angeschlossen. Er mißt von der Venturidüse ausgehende Drücke und wirkt über ein Gestänge auf die Regulierklappe und einen dem Ekeltromotor vorgeordneten Regelwiderstand. Dieses Gestänge ist so ausgebildet, daß es, ausgehend von einer Stellung bei stehendem Fahrzeug, in welcher der Regelwiderstand überbrückt und die Durchflußregulierklappe maximal geöffnet ist, in einem ersten Bewegungsbereich bei gleichbleibend geöffneter Klappe den Regelwiderstand zunehmend in die Stromversorgung des Elektromotors einschaltet. Ist der Regelwiderstand ganz eingeschaltet, dann verhält sich das Gestänge bezüglich der Durchlußregulierklappe starr, so daß in dem anschließenden Bewegungsbereich bei steigender Fahrzeugeschwindigkeit die Klappe zunehmend geschlossen wird. Diese Lüftungsanlage hält den Luftdurchsatz im wesentlichen konstant.

Der Luftdurchsatz ist von Hand über einen Drehknopf, mittels dem über eine Gewindespindel die Länge des Gestänges veränderbar ist, wählbar. Nachteilig ist, daß die Venturidüse weit weg ist vom Einlaß des Lüftungskanals. Eine solche Anordnung ist im Fahrzeugbau kaum zu realisieren. Außerdem sind weitere Schwierigkeiten zu erwarten, wenn in dem Fahrzeug nahe bei der Venturidüse ein Wasserkühler für den Motor und ein mit willkürlich unterschiedlichen Drehzahlen arbeitender Kühlerlüfter angeordnet sind. Das Ein- und Ausschalten oder das Verändern der Drehzahl des Lüfters beeinflußt nämlich die Einströmgeschwindigkeit von Luft in den Bug des Fahrzeugs. Um eine ausreichend genaue Verstellung der Regulierklappe zu bekommen, muß der Faltenbalg voluminös ausgebildet sein, was seine Unterbringung im Fahrzeug erschwert. Die DE-B-19 01 972 offenbart ebenfalls eine solcherart aufgebaute Lüftungsanlage mit einem Faltenbalg und weist darauf hin, daß es möglich sei, elektrische Antriebsmittel für die Regulierklappe zu verwenden.

Es stellte sich die Aufgabe, eine verbesserte Lüftungsanlage zu schaffen.

### Vorteile der Erfindung

Die Lüftungsanlage, insbesondere Klimaanlage gemäß den kennzeichnenden Merkmalen des Hauptanspruchs mißt direkt den Luftdurchsatz zum Fahrgastraum und vermeidet dadurch von vornherein Anpaßarbeiten, die bei dem Einbau der vorbekannten Anlage in unterschiedliche Fahrzeugtypen unvermeidlich sind. Des weiteren ist bei der vorgeschlagenen Anlage die Reguliergenauigkeit wesentlich höher, weil lediglich gemessen wird, ob der Luftdurchsatz durch den Lüftungskanal, der über eine einfache Wirkdruckmessung erfolgt, von einem vorgewählten Wert abweicht oder nicht. Demgegenüber spielt der zusätzliche Energiebedarf für die elektrische Übertragung von Wirkdruckmeßwerten und deren Verarbeitung eine untergeordnete Rolle, besonders dann, wenn ohnehin ein elektronisches, beispielsweise mit einem Prozessor ausgerüstetes Gerät zur Regelung der Temperatur der durchgesetzten Luft vorhanden ist. In diesem Fall kann man die Aufgabe des Steuerns der Regulierklappe und der Motordrehzahl auf den Prozessor übertragen.

Das kennzeichnende Merkmal des Anspruchs 2 gibt eine Anlage an, bei der, ohne daß zusätzliche Strömungsverluste entstehen, auf den Wirkdruckmesser so große Druckunterschiede wirken, daß er keine hohe Empfindlichkeit benötigt und deshalb preiswert herstellbar ist. Das Ausbildungsbeispiel gemäß dem Anspruch 3 gibt ein praktisches Ausführungsbeispiel an. Das Ausführungsbeispiel gemäß den kennzeichnenden Merkmalen des Anspruchs 4 hat die Vorteile, daß für das Gebläse nur dann Strom verbraucht wird, wenn das vollständige Öffnen der Regulierklappe nicht zur Aufrechterhaltung eines vorbestimmten bzw. vorgewählten Luftdurchsatzes ausreicht, und daß der Motor des Gebläses zum Beispiel bei hohem Staudruckeinfluß nicht überlastet und zerstört wird.

### Zeichnung

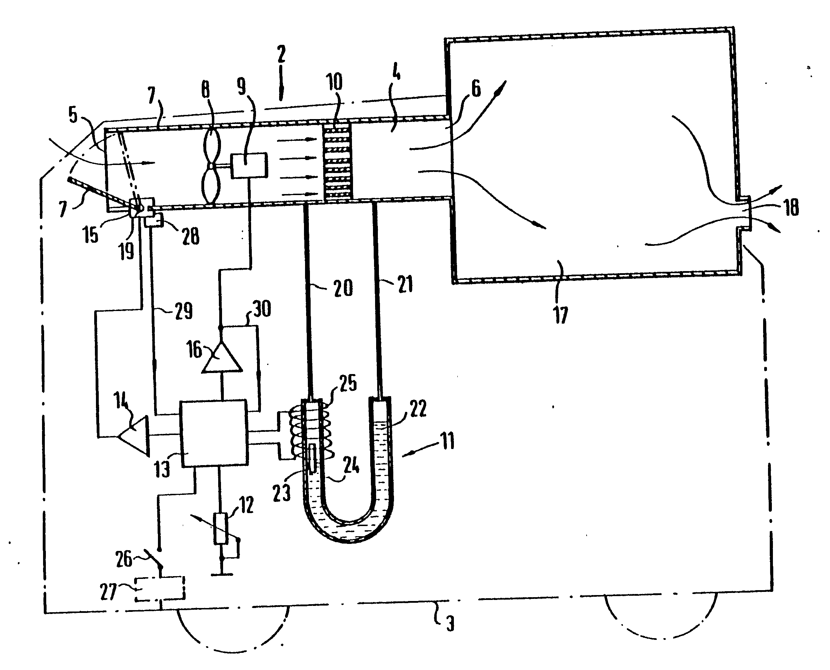

Ein Ausführungsbeispiel der erfindungsgemäßen Lüftungs- bzw. Klimaanlage ist in der Zeichnung schematisch dargestellt und in der nachfolgenden Beschreibung näher erläutert.

### Beschreibung des Ausführungsbeispiels

Die Anlage 2 ist dazu bestimmt, in ein Fahrzeug 3 eingebaut zu werden, und hat einen Lüftungskanal 4 mit einem Einlaß 5 und einem Auslaß 6, eine Durchflußregulierklappe 7, ein Gebläse 8 mit einem Elektromotor 9 und einen Wärmetauscher 10, einen Druckmesser 11, einen Sollwertgeber 12, einen Regler 13, einen Verstärker 14, einen Verstellmotor 15 und einen zweiten Verstärker 16. Das Fahrzeug ist beispielsweise ein Personenkraftfahrzeug mit einem Fahrgastraum 17. In den Fahrgastraum 17 mündet der Auslaß 6 des Lüftungskanals 4. Der Fahrgastraum 17 hat in an sich bekannter Weise wenigstens eine Entlüftungsöffnung 18. Der Einlaß 5 des Lüftungskanals 4 mündet beispielsweise vor einer nicht dargestellten Windschutzscheibe des Fahrzeugs 3 in die Umgebung.

Im dargestellten Beispiel ist die Durchflußregulierklappe 4 als Schwenkklappe ausgebildet und mit einer Austriebswelle 19 des Verstellmotors 15 verdrehfest verbunden. Die Durchflußregulierklappe 7 ist so verstellbar, daß sie einerseits das Einströmen von Luft in den Lüftungskanal möglichst wenig behindert und andererseits den Einlaß 5 zumindest annähernd verschließen kann. Innerhalb des Lüftungskanals ist das Gebläse 8 so angeordnet, daß es durch den Einlaß 5 Luft ansaugen und durch den Wärmetauscher 10 und den Auslaß 6 in den Fahrgastraum 17 drücken kann. Die Entlüftungsöffnung 18 im Fahrgastraum 17 sorgt dafür, daß innerhalb des Lüftungskanals 4 eine anhaltende Luftströmung zustande kommen kann.

Der Wärmetauscher 10 kann ein in an sich bekannter Weise ausgebildeter Wärmetauscher zum Erwärmen oder zum Kühlen von Luft oder zum abwechselnden Erwärmen und Abkühlen von Luft sein. In Strömungsrichtung der Luft ist vor diesem Wärmetauscher 10 eine Verbindungsleitung 20 an den Lüftungskanal 4 angeschlossen. Eine weitere Verbindungsleitung 21 mündet hinter dem Wärmetauscher 10 in den Lüftungskanal 4. Der Druckmesser 11 ist als U-Rohr-Manometer ausgebildet und an die Verbindungsleitungen 20 und 21 angeschlossen und teilweise mit einer Flüssigkeit gefüllt und nimmt einen in diese Flüssigkeit 22 eintauchenden Schwimmer 23 auf. Die Flüssigkeit kann beispielsweise Öl oder Quecksilber sein. Der Schwimmer besteht aus einem Werkstoff oder er enthält einen solchen Werkstoff, der zum Beeinflussen des Verlaufs von Magnetfeldlinien geeignet ist. Im Falle, daß die Flüssigkeit 22 Quecksilber ist, kann der Schwimmer aus einem Eisenstück bestehen. Im Bewegungsbereich des Schwimmers 23 ist um einen Schenkel 24 des U-Rohr-Manometers eine Induktionsspule 25 angeordnet. Die Induktionsspule 25 ist an den Regler 13 angeschlossen und wird während des Betriebs der Anlage 2 von dem Regler 13 mit einer Wechselspannung versorgt. Der Regler 13 versorgt sich seinerseits über einen Schalter 26 aus einem Bordnetz 27 des Fahrzeugs 3. Je nach dem, welche Druckunterschiede zwischen den Verbindungsleitungen 20 und 21 herrschen, nimmt der Schwimmer 23 unterschiedliche Höhenausrichtungen innerhalb des Schenkels 24 ein. Unterschiedliche Höhenausrichtungen dieses Schwimmers innerhalb der Induktionsspule 25 bewirken Veränderungen von deren Induktivität. Die jeweilige Größe der Induktivität und/oder deren Veränderung wird von dem Regler 13 gemessen und mit einem Sollwert verglichen. Der Sollwert ist an dem Sollwertgeber 12 von Hand einstellbar. Der Regler enthält einen an sich bekannten nicht dargestellten Vergleicher und eine an diesen angeschlossene Vorrangschaltung, die ebenfalls nicht dargestellt ist. An diese ist sowohl der Verstärker 14 als auch der Verstärker 16 angeschlossen. Die Verstärker 14 und 16 entnehmen elektrische Hilfsenergie ebenfalls aus dem Bordnetz 27 des Fahrzeugs 3.

Bei stehendem Fahrzeug 3 und bei Windstille herrscht bei geöffnetem Schalter 26 in den beiden Verbindungsleitungen 20 und 21 gleicher Druck und der Schwimmer 23 nimmt eine Ausgangslage ein und verursacht eine bestimmte Größe der Induktivität der Induktionsspule 25. Es sei angenommen, daß der Sollwertgeber 12 eine Einstellung für einen gewissen Luftdurchsatz durch den Fahrgastraum hat. Dann wird beim Schließen des Schalters 26 der Vergleicher, was bei stehendem Fahrzeug und stillstehendem Gebläse 8 der Fall ist, Ungleichheit festellen, und einen Befehl an die erwähnte Vorrangschaltung geben. In diese Vorrangschaltung führt eine von einem an den Verstellmotor 15 angeflanschten Stellungsmelder 28 ausgehende Meldeleitung 29, und eine weitere Meldeleitung 30 führt von dem Motor 9 ebenfalls in die Vorrangschaltung. Die Vorrangschaltung ist so konzipiert, daß bei stillstehendem Motor 9, wenn also die Meldeleitung 30 keine Spannung, die auf einen Motorantriebsstrom schließen läßt, führt, der Vergleicher auf den Verstärker 14 wirkt, so daß dieser an den Verstellmotor 15 eine Spannung abgibt, die ein Öffnen der Durchfußregulierklappe 7 zur Folge hat. Die Regulierklappe 7 wird zunehmend geöffnet, was der Vorrangschaltung mittels des Stellungsmelders 28 über die Meldeleitung 29 mitgeteilt wird. Ist die Durchflußregulierklappe 7 in ihre Stellung « ganz offen » gelangt, so unterbricht die Vorrangschaltung das Steuersignal zum Verstärker 14 und schaltet den Verstärker 16 ein. Dieser setzt den Elektromotor 9 des Gebläses 8 in Betrieb. Nun entsteht infolge der Gebläsedrehung ein Luftstrom durch den Lüftungskanal 4 und den Wärmetauscher 10. Der Wärmetauscher 10 bildet einerseits eine Strömungswiderstandsstrecke innerhalb des Lüftungskanals 4 und andererseits eine Verengung des Querschnitts des Lüftungskanals 4 an der Einbaustelle. Dies hat zur Folge, daß der Luftdruck in der Verbindungsleitung 20 größer wird als derjenige in der Verbindungsleitung 20 größer wird als derjenige in der Verbindungsleitung 21. Dies bewirkt eine Absenkung des Schwimmers 23 und dementsprechend eine Veränderung der Induktivität der Induktionsspule 25. Dementsprechend liegt an dem Vergleicher des Reglers 13 eine veränderte Meßspannung an. Solange diese veränderte Meßspannung nicht mit der mittels des Sollwertgebers 12 erzeugten Spannung übereinstimmt, wirkt der Vergleicher weiterhin auf den Verstärker 16 ein, so daß die Drehzahl des Motors 9 und die Durchsatzleistung des Gebläses 8 weiterhin ansteigen. Schließlich wächst der Druck vor dem Wärmetauscher 10 so weit an, daß der Schwimmer 23 so weit nach unten wandert, daß er den Vergleicher veranlaßt, über den Verstärker 16 den Strom durch den Motor 9 zu reduzieren. Tritt dieser Fall ein, so entspricht die durch den Lüftungskanal 4 strömende Luftmenge der am Sollwertgeber 12 eingestellten Menge. Wird das Fahrzeug beschleunigt und/oder in einen Gegenwind gelenkt, so reduziert sich die Drehzahl des Gebläses 8 weiterhin nach dem vorher erwähnten Schema. Schließlich kann der Fall eintreten, daß der Motor 9 nicht mehr angetrieben wird, weil kein antreibend wirkender Strom mehr von dem Verstärker 16 abgegeben wird. Dann liegt an der Meldeleitung 30 auch keine einen Motorbetrieb anzeigende Spannung mehr an. Dies wird der Vorrangschaltung gemeldet. Daraufhin verbindet diese den Vergleicher mit dem Verstärker 14, so daß ein gegebenenfalls zu hoher Druck in der Verbindungsleitung 20 das Anlaufen des Verstellmotors 15 in dem Sinne bewirkt, daß die Durchflußregulierklappe 7 aus ihrer Stellung « ganz offen » im Schließsinne bewegt wird. Dies ergibt eine Drosselung, die dem Staudruck infolge der Anblasegeschwindigkeit, der der Einlaß 5 ausgesetzt ist, entgegenwirkt. Dies bewirkt eine Verringerung des Luftdurchsatzes durch den Lüftungskanal 4. Dadurch beginnt der Druck in der Verbindungsleitung 20 zu fallen. Schließlich erkennt der Vergleicher, daß die von der Induktionsspule 5 abgegebene Spannung mit dem Sollwert übereinstimmt. Der Vergleicher stoppt daraufhin die Verstellung der Durchflußregulierklappe 7. Wird das Fahrzeug 3 nun abgebremst oder aus der Richtung des Gegenwindes gelenkt, so nimmt der Staudruck auf den Einlaß 5 ab und der Schwimmer 23 beginnt in der Induktionsspule 25 zu steigen. Der Vergleicher steuert nun den Verstärker 14 so an, daß dieser einen gegenüber dem vorgenannten Regelbeispiel entgegengesetzten Strom durch den Verstellmotor 15 treibt. Dieser schwenkt dann die Durchflußregulierklappe 7 solange in Richtung « ganz offen », bis der Vergleicher keine Abweichung vom Sollwert mehr erkennt. Ist durch weiteres Vermindern der Fahrgeschwindigkeit schließlich die Durchflußregulierklappe 7 in ihre Stellung « ganz offen » geschwenkt worden, so meldet der Stellungsmelder 28 das Erreichen dieser Stellung über die Leitung 29 an die Vorrangschaltung. Die Vorrangschaltung verbindet nun wieder den Vergleicher mit dem Verstärker 16, so daß bei einem weiterem Druckabfall in der Verbindungsleitung 20 der zuerst beschriebene Regelvorgang abermals auftritt.

Anstelle des als U-Rohr-Manometers 11 mit induktiver Meßvertübertragung kann auch eine mit einer Membran ausgerüstete Druckmeßdose verwendet werden. Auf dieser Membran können beispielsweise Dehnungsmeßstreifen angeordnet sein zur elektrischen Meßwertangabe. Wenn die Dehnungsmeßstreifen, die nach Art einer Meßbrücke miteinander verknüpft sind, mit Gleichspannung versorgt werden, so kann, wenn der Sollwertgeber wie im dargestellten Beispiel als Verstellwiderstand ausgebildet ist, der Vergleicher in einfacher Weise· unter Verwendung eines handelsüblichen Operationsverstärkers aufgebaut werden.

Der Einbauraum, der beim jeweiligen Fahrzeugtyp durch den Konstrukteur festgelegt wird, kann unterschiedlich geformte und verlaufende Lüftungskanäle 4 bedingen. So kann unter sehr beengten räumlichen Verhältnissen der Lüftungskanal einfach oder mehrfach abgeknickt sein. Solche unvermeidlichen Abknickungen verursachen ebenfalls Strömungswiderstände. Diese Strömungswiderstände können, wenn sich der Wärmetauscher 10 unmittelbar an diese anschließt, dazu verwendet werden, eine Vergrößerung der Meßanzeige zu bekommen.

Es brauchen dann lediglich die Verbindungsleitungen 20, 21 dementsprechend versetzt an den Luftführungskanal 4 angeschlossen zu werden. Ebenso ist es auch möglich, bei Verwendung von empfindlicheren Druckmessern andere Widerstandsstrecken als den Wärmetauscher 10 allein zur Messung der Durchsatzmenge zu benutzen. Aus räumlichen Gründen können gegebenenfalls anstelle einer Durchflußregulierklappe 7 zwei gegensinnig schwenkbare Klappen, die gemeinsam den Querschnitt des Einlasses 5 verschließen können, angeordnet werden.

**Patentansprüche**

1. Lüftungs-, insbesondere Klimaanlage (2) für Fahrzeuge (3) mit einem von außen in einen Fahrgastraum (17) führenden Lüftungskanal (4), mit wenigstens einer von einem Verstellmotor (15) verstellbaren Durchflußregulierklappe (7) und einem von einem Elektromotor (9) mit unterschiedlichen Drehzahlen antreibbaren Gebläse (8) und mit einem Druckmesser (11), der auf den Verstellmotor (15) wirkt und die Drehzahl des Gebläses (8) verändert in dem Sinne, daß trotz unterschiedlicher Fahrgeschwindigkeiten die an einem Sollwertgeber eingestellte Luftdurchsatzmenge möglichst gleich bleibt, dadurch gekennzeichnet, daß der Druckmesser (11) als Wirkdruckmesser ausgebildet ist und einer seiner beiden Anschlüsse vor einer Strömungswiderstandsstrecke, die sich innerhalb des Lüftungskanals (4) befindet, und der andere dahinter an den Lüftungskanal (4) angeschlossen ist.

2. Lüftungsanlage nach Anspruch 1, dadurch gekennzeichnet, daß die Strömungswiderstandsstrecke aus einem in den Lüftungskanal (4) eingebauten Wärmetauscher (10) besteht.

3. Lüftungsanlage nach Anspruch 1 oder 2, dadurch gekennzeichnet, daß der Druckmesser (11) als U-Rohr-Manometer ausgebildet ist und einen elektrischen Meßwertgeber (23, 25) hat.

4. Lüftungsanlage nach einem der Ansprüche 1 bis 3, dadurch gekennzeichnet, daß der Meßwertgeber (23, 25) und der Sollwertgeber (12) mit einem Regler (13) verbunden sind, und daß der Regler (13) so aufgebaut ist, daß der Elektromotor (9) des Gebläses (8) nur bei geöffneter Durchflußregulierklappe (7) einschaltbar ist und die Durchflußregulierklappe (7) nur bei abgeschaltetem Elektromotor (9) verstellbar ist.

**Claims**

1. Ventilating, in particular air-conditioning system (2) for vehicles (3), having a ventilating channel (4) leading from outside into a passenger space (17), having at least one flow-control butterfly valve (7), which can be regulated by a regulating motor (15), and a fan (8) which can be driven at different speeds by an electric motor (9), and having a pressure gauge (11) which acts on the regulating motor (15) and changes the speed of the fan (8) in the sense that, in spite of different travelling speeds, the air throughput rate set at a set-point adjuster remains as uniform as possible, characterised in that the pressure gauge (11) is designed as a differential-pres gauge and one of its two connections is connected to the ventilating channel (4) in front of a flow-resistance section located within the ventilating channel (4), and the other connection is connected to the ventilating channel (4) behind the flow-resistance section.

2. Ventilating system according to Claim 1, characterized in that the flow-resistance section consists of a heat exchanger (10) built into the ventilating channel (4).

3. Ventilating system according to Claim 1 or 2, characterized in that the pressure gauge (11) is designed as a U-tube manometer and has an electric measurement transducer (23, 25).

4. Ventilating system according to one of Claims 1 to 3, characterized in that the measurement transducer (23, 25) and the set-point adjuster (12) are connected to a controller (13), and that the controller (13) is constructed in such a way that the electric motor (9) of the fan (8) can only be switched on when the flow-control butterfly valve (7) is open, and the flow-control butterfly valve (7) can only be adjusted when the electric motor (9) is switched off.

**Revendications**

1. Installation de ventilation, en particulier de climatisation (2) pour véhicule (3), comportant un canal de ventilation (4) reliant l'extérieur à l'habitacle (17) du véhicule, avec un volet de réglage de débit (7) entraîné par au moins un moteur de réglage (15) et un ventilateur (8) entraîné à des vitesses de rotation différentes par un moteur électrique (9) et un manomètre (11) qui agit sur le moteur de réglage (15) et modifie la vitesse de rotation du ventilateur (8) de façon que, malgré les variations de vitesse de déplacement, le débit d'air réglé sur un générateur de grandeurs de consigne reste aussi constant que possible, caractérisée en ce que le manomètre (11) est réalisé comme manomètre de pression efficace et l'un de ses deux branchements se trouve en amont du chemin à perte de charge à l'intérieur du canal de ventilation (4) et l'autre branchement se trouve en arrière de ce chemin dans le canal de ventilation (4).

2. Installation de ventilation selon la revendication 1, caractérisée en ce que le chemin à perte de charge se compose d'un échangeur de chaleur (10) monté dans le canal de ventilation (4).

3. Installation de ventilation selon la revendication 1 ou 2, caractérisée en ce que le manomètre (11) est un manomètre à tube en U et comporte un capteur électrique de grandeurs de mesure (23, 25).

4. Installation de ventilation selon l'une des revendications 1 à 3, caractérisée en ce que le capteur de grandeurs de mesure (23, 25) et le générateur de grandeurs de consigne (12) sont reliés à un dispositif de régulation (13) et en ce que le dispositif de régulation (13) est réalisé de façon que le moteur électrique (9) du ventilateur (8) ne soit mis en œuvre que lorsque le volet de réglage de débit (7) est ouvert et que le volet de réglage de débit (7) ne soit réglable que lorsque le moteur électrique (9) est arrêté.